# FASCICULE DE BREVET EUROPEEN

(11) **EP 1 454 328 B1**
(45) Date de publication et mention de la délivrance du brevet: **17.02.2010**
(21) Numéro de dépôt: 02805389.0
(22) Date de dépôt: 13.12.2002
(51) Int. Cl.: G21F 7/047, B65B 55/00, G21F 7/005

(54) **DISPOSITIF DE PROTECTION POUR ENCEINTE STERILE**
SCHUTZEINRICHTUNG FÜR EINE STERILE KAMMER
PROTECTIVE DEVICE FOR STERILE CHAMBER

(30) Priorité: 14.12.2001 FR 0116254
(43) Date de publication de la demande: 08.09.2004
(73) Titulaire: Becton Dickinson France, 38800 Le Pont de Claix (FR)
(72) Inventeur: PORRET, Jean-Yves, F-38610 Gieres (FR)
(74) Mandataire: Brédeville, Odile Marie
(86) Numéro de dépôt international: PCT/FR2002/004357
(87) Numéro de publication internationale: WO 2003/053784

(56) Documents cités:
- FR-A- 2 787 235
- US-A- 4 310 034
- US-A- 5 447 699

## Description

La présente invention concerne un dispositif de protection pour une enceinte stérile susceptible d'être mise en communication avec une autre enceinte stérile afin de permettre le transfert d'objets d'une enceinte à l'autre.

Pour distinguer ces deux enceintes, la première enceinte citée sera dénommée ci-après "première enceinte" tandis que la deuxième enceinte citée sera dénommée "deuxième enceinte".

La première enceinte peut notamment être une enceinte dans laquelle un travail doit être réalisé sur des pièces stériles, et la deuxième enceinte peut notamment être une enceinte permettant le transfert de ces pièces stériles, avant ou après l'accomplissement dudit travail.

L'invention trouve une application particulièrement intéressante dans le cas des enceintes utilisées pour assembler des composants de seringues. La première enceinte est celle dans laquelle cet assemblage est réalisé, et la deuxième enceinte comprend généralement un sac souple en matière plastique, de réception des composants ou ensembles de composants à transférer.

Pour leur mise en communication l'une avec l'autre, ces enceintes comprennent des brides de raccordement étanche d'une enceinte à l'autre et sont équipées de portes d'accès, reçues avec étanchéité dans ces brides.

Sur un type d'enceintes existantes, décrites dans les documents FR 98 15850 et FR 98 15851 au nom de la demanderesse, les bords périphériques des portes des deux enceintes viennent en application intime l'un contre l'autre lorsque les enceintes sont raccordées, par un joint d'étanchéité que comprend au moins l'une de ces portes, puis ces portes sont liées l'une à l'autre par des moyens magnétiques et l'exercice d'un vide entre les portes. L'espace contaminé délimité par ces portes et ces bords périphériques est ainsi confiné. Des moyens sont ensuite actionnés pour libérer ces portes et mettre les deux enceintes en communication l'une avec l'autre.

Ces enceintes existantes donnent satisfaction en pratique, mais il a pu être constaté qu'elles laissent subsister certains risques résiduels de contamination de l'enceinte de travail.

US 4,310,034 décrit un dispositif de jonction entre un conteneur de transport de combustible nucléaire et une paroi horizontale de déchargement, utilisant un entonnoir venant au contact de la zone du conteneur formant le siège de la porte dudit conteneur.

La présente invention vise à remédier à cet inconvénient essentiel, en fournissant un dispositif de protection propre à éliminer tout risque de contamination d'une première enceinte par une deuxième enceinte à la suite de la mise en communication de ces enceintes l'une avec l'autre.

La présente invention se rapporte à un dispositif de protection pour une enceinte stérile susceptible d'être mise en communication avec une autre enceinte stérile, selon la revendication 1.

Cette pièce de protection est contenue dans l'une des enceintes et est placée dans cette position de recouvrement sans contact immédiatement après l'ouverture des portes des enceintes. Elle permet d'empêcher toute venue en contact des objets à transférer, des emballages de ces objets et/ou des gants ou des vêtements de l'opérateur avec le joint d'étanchéité se trouvant à l'interface de raccordement des sièges des portes.

Il existe en effet le risque que ce joint soit touché ou déplacé, même très légèrement, par lesdits objets, emballages, gants ou vêtements lorsque ceux-ci sont transférés d'une enceinte à l'autre. Un tel contact ou déplacement conduit, s'il se produit, à rompre l'intégrité du contact de ce joint avec les surfaces contre lesquelles ce joint est appliqué, et donc à mettre un espace contaminé en communication avec l'atmosphère des enceintes.

L'invention permet ainsi d'éliminer complètement ce risque de contact ou de déplacement et solutionne par conséquent les risques de contamination résiduels que présentent les enceintes selon la technique antérieure.

De préférence, lesdits moyens de positionnement sont constitués par une ou plusieurs zones de la pièce de protection, conformées pour prendre appui contre la pièce délimitant le siège de l'une des portes, en des emplacements stériles de celle-ci.

Ce positionnement est ainsi réalisé de manière particulièrement simple, notamment par une seule main de l'opérateur.

Selon une forme de réalisation préférée de l'invention, le dispositif de protection comprend au moins un bras de support de la pièce de protection, relié d'une part à cette pièce de protection et d'autre part à l'une des parois d'une enceinte, ce bras permettant le déplacement de la pièce de protection entre ladite position de recouvrement sans contact et une position d'effacement.

La pièce de protection peut ainsi être facilement déplacée entre ses positions de recouvrement sans contact et d'effacement, et, dans cette position d'effacement, ne gêne pas le travail opéré dans l'enceinte.

Le bras de support peut notamment être monté pivotant sur la paroi de l'enceinte à laquelle il est relié.

Avantageusement, le dispositif de protection comprend des moyens permettant d'immobiliser la pièce de protection dans ladite position de recouvrement sans contact, de sorte que tout risque de déplacement de cette pièce lors du transfert des objets est éliminé.

Ces moyens d'immobilisation peuvent par exemple comprendre au moins un verrou, ou, si le dispositif comprend un bras pivotant tel que précité, des moyens de blocage ou de serrage agissant entre ce bras et l'axe de pivotement ou entre cet axe et la console assurant le montage de cet axe sur la paroi correspondante de l'enceinte.

Pour sa bonne compréhension, l'invention est à nouveau décrite ci-dessous en référence au dessin schématique annexé représentant, à titre d'exemple non limitatif, une forme de réalisation préférée du dispositif de protection qu'elle concerne.
La figure 1 est une vue en coupe longitudinale de deux enceintes stériles destinées à être raccordées l'une à l'autre ; chaque enceinte comprend à cet effet une porte qui la ferme normalement, une bride formant le dormant de cette porte et un joint placé entre cette porte et cette bride ;
la figure 2 est une vue en coupe longitudinale et à échelle agrandie d'une portion d'un bord périphérique de la porte qui ferme l'une de ces enceintes, de la bride correspondante et du joint placé entre cette porte et cette bride ;
la figure 3 est une vue similaire à la figure 2 d'une portion du bord périphérique de la porte, de la bride et du joint qui assurent la fermeture de l'autre enceinte ;
la figure 4 est une vue partielle, en coupe selon la ligne IV-IV de la figure 5 et à échelle agrandie, d'un ensemble de verrouillage des brides l'une à l'autre et d'organes de verrouillage de chaque porte sur la bride correspondante ;
la figure 5 est une vue de cet ensemble de verrouillage et de ces organes en coupe selon la ligne V-V de la figure 4 ;
la figure 6 est une vue partielle des enceintes, similaire à la figure 1, après raccordement de ces enceintes et avant ouverture des portes ;
la figure 7 est une vue des enceintes similaire à la figure 6 après ouverture des portes, et
la figure 8 est une vue des enceintes similaire à la figure 7 après mise en place au niveau de la zone de raccordement des brides d'un dispositif de protection que comprend l'une des enceintes.

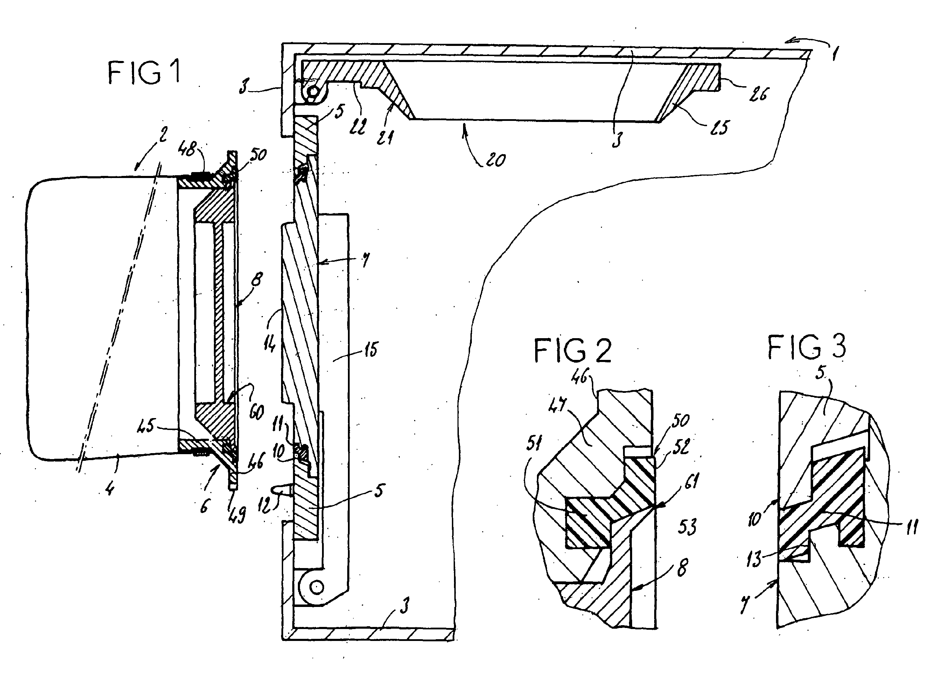

La figure 1 représente une enceinte stérile 1 à laquelle est destinée à être raccordée une autre enceinte stérile 2 pour permettre le transfert d'objets de l'enceinte 2 à l'enceinte 1, ou inversement.

L'enceinte 1 est une enceinte dans laquelle un travail doit être réalisé sur des pièces stériles, par exemple l'assemblage de composants de seringues. L'enceinte 2 est quant à elle une enceinte permettant le transfert de ces pièces stériles, avant ou après l'accomplissement dudit travail. Dans l'exemple représenté au dessin, cette enceinte 2 est à usage unique, ainsi que cela apparaîtra plus loin.

Chaque enceinte 1, 2 comprend des parois, respectivement 3, 4 qui délimitent son volume intérieur, une bride circulaire, respectivement 5, 6, et une porte d'accès, respectivement 7, 8. Les brides 5, 6 forment les dormants de réception des portes 7, 8 avec étanchéité, et sont propres à être raccordées l'une à l'autre pour la mise en communication des enceintes 1 et 2, après quoi les portes 7, 8 sont ouvertes.

Comme le montre plus précisément la figure 3, la bride 5 de l'enceinte 1 présente un rebord circulaire 10 faisant saillie radialement vers l'intérieur, qui forme des portées d'étanchéité contre lesquelles un joint circulaire 11 monté sur la porte 7 vient étroitement en application en position de fermeture de cette porte 7.

La bride 5 comporte également des doigts 12 faisant saillie de sa face extérieure à l'enceinte 1, permettant le positionnement de la bride 6 par rapport à elle.

La porte 7 comprend une nervure annulaire 13 de montage du joint 11 et un bossage central 14 faisant saillie axialement de sa face extérieure.

Cette porte 7 est en outre reliée à un bras 15 monté pivotant sur l'une des parois 3. Ce bras 15 permet le pivotement de la porte 7 entre la position de fermeture représentée sur la figure 1 et une position de complète ouverture, dans laquelle cette porte 7 est rabattue contre l'une des parois 3.

L'enceinte 1 comprend également un dispositif de protection 20 formé par une pièce annulaire 21 et un bras 22 de support de cette pièce 21.

La pièce 21 comprend une portion 25 de forme tronconique et une portion 26 de forme circulaire.

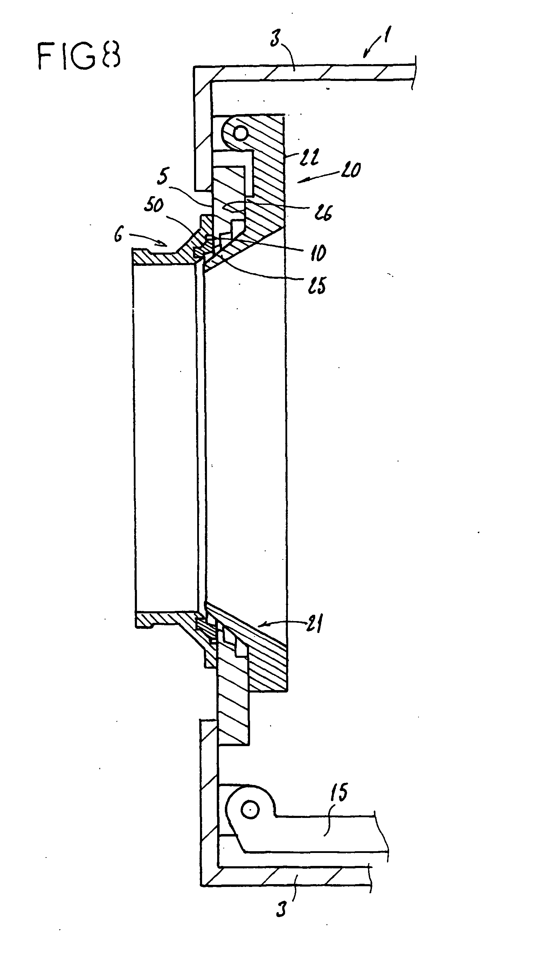

La figure 8 montre que la portion 25 est dimensionnée de manière à pouvoir, lorsque la porte 7 est en position d'ouverture, être engagée au travers du siège délimité par la bride 5, de manière à recouvrir les zones de la bride 5 formant ce siège, jusqu'au-delà de la face extérieure du rebord 10 et du joint 50 que comprend la bride 6, et sans contact avec ces zones.

Ainsi, la paroi de la portion 25 est propre à recouvrir, lorsqu'elle est engagée dans les ouvertures délimitées par les sièges des portes (7,8) des enceintes (1,2) l'interface de raccordement de ces sièges, sans contact avec cette interface ni avec les zones environnantes, c'est-à-dire les zones de la bride 5 formant le siège de la porte 7 jusqu'au-delà de la face extérieure du rebord 10 et du joint 50 que comprend la bride 6.

La portion circulaire 26 est quant à elle conformée de manière à venir en appui contre la face de la bride 5 tournée vers l'intérieur de l'enceinte 1 afin de positionner axialement la portion 25 par rapport à la bride 5 dans cette position de recouvrement sans contact.

Le bras 22 est monté pivotant sur l'une des parois 3 de l'enceinte 1 et permet le déplacement de la pièce 21 entre cette position de recouvrement sans contact et une position d'effacement montrée sur la figure 1, dans laquelle le dispositif 20 est rabattu contre l'une des parois 3 et ne gêne pas le travail à l'intérieur de l'enceinte 1.

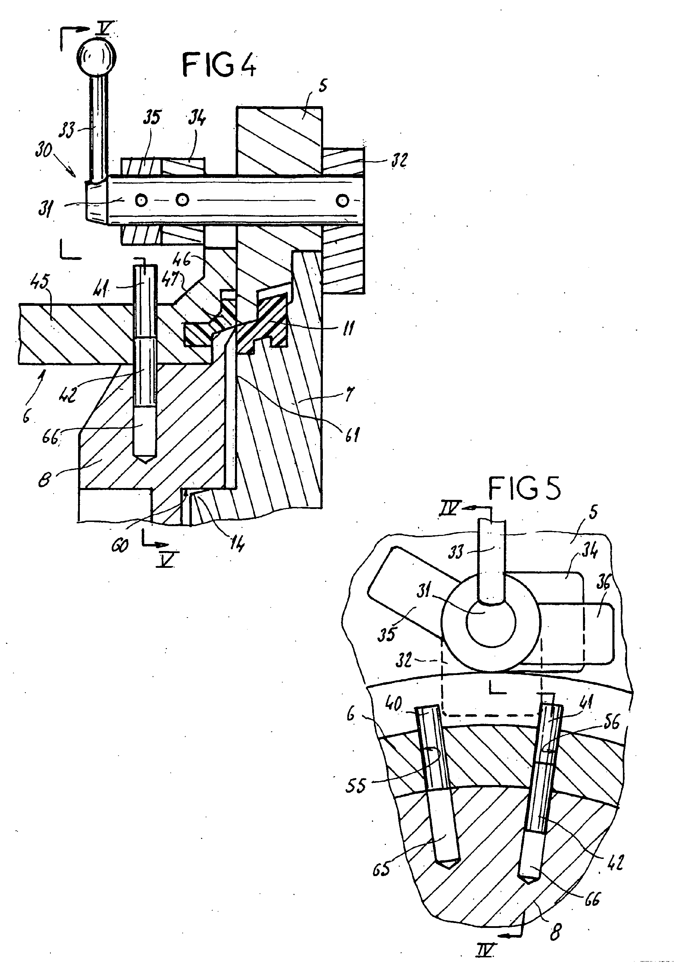

L'enceinte 1 comprend en outre des ensembles 30 de verrouillage de la porte 7 en position de fermeture, dont un est visible sur les figures 4 et 5.

En référence à ces figures, chaque ensemble 30 comprend un arbre 31 monté libre en rotation dans un alésage traversant la bride 5, un verrou 32 calé sur une extrémité de l'arbre 31 dépassant dans l'enceinte 1, et un levier 33 calé sur l'autre extrémité de l'arbre 31, qui dépasse à l'extérieur de l'enceinte 1. Le verrou 32 présente la forme d'une palette et peut occuper soit une position angulaire dans laquelle il plaque la porte 7 contre la bride 5, soit une position angulaire dans laquelle il est situé radialement à l'extérieur de cette porte 7 pour autoriser les mouvements de celle-ci.

L'arbre 31 comporte également, sur l'extérieur de la bride 5, comme visible sur la figure 5, un verrou 34 également en forme de palette et deux doigts radiaux 35, 36 calés sur lui. Ainsi que cela se comprend en référence aux figures 4 et 5, le verrou 34 peut occuper soit une position angulaire dans laquelle il plaque la bride 6 contre la bride 5, soit une position angulaire dans laquelle il est situé radialement à l'extérieur de cette bride 6 pour autoriser la mise en place ou le retrait de celle-ci par rapport à la bride 5. La figure 5 montre que le verrou 34 est décalé angulairement par rapport au verrou 32 de telle sorte que le verrou 34 est effacé lorsque le verrou 32 maintient la porte 7 contre la bride 5 et que ce verrou 34 vient porter contre la bride 6 avant que le verrou 32 libère la porte 7.

Les doigts radiaux 35, 36 sont également décalés angulairement et permettent d'actionner des pions 40, 41, 42 décrits plus loin, de déverrouillage/verrouillage de la porte 8.

S'agissant de l'enceinte 2, les parois 4 sont réalisées sous la forme d'un sac en une matière plastique souple et étanche.

La bride 6 présente une jupe tubulaire 45 pour sa jonction étanche audit sac, une paroi 46 faisant saillie radialement vers l'extérieur, destinée à venir en application contre la bride 5 et à coopérer avec le verrou 34, et une zone intermédiaire 47 formant le siège de réception de la porte 8.

La jupe 45 présente une gorge aménagée à partir de sa face extérieure, recevant un cerclage 48 qui assure la jonction étanche dudit sac à elle.

La paroi 46 comprend des encoches 49 aménagées à partir de son bord extérieur, destinées à recevoir les doigts 12 lorsque la bride 6 est amenée au contact de la bride 5 en vue du raccordement de l'enceinte 2 à l'enceinte 1. Ces doigts 12 et encoches 49 forment ainsi des moyens de positionnement des brides 6, 5 l'une par rapport à l'autre.

La zone intermédiaire 47 forme, ainsi que le montre la figure 2, une gorge de réception d'un joint 50 assurant l'étanchéité entre cette bride 6 et la porte 8. Ce joint 50 présente une partie de montage 51 engagée dans cette gorge, une partie frontale 52 faisant légèrement saillie au-delà de la face axiale d'extrémité de la bride 6, et des portées 53 de réception de la zone périphérique 8a de la porte 8.

En outre, comme le montrent les figures 4 et 5, la bride 6 comprend deux alésages radiaux 55, 56 aménagés de telle sorte qu'ils se trouvent à l'aplomb des doigts 35 et 36 lorsque la bride 6 est au contact de la bride 5, comme le montre la figure 4.

La porte 8 comprend un embrèvement 60 aménagé à partir de sa face extérieure, dimensionné de manière à pouvoir recevoir étroitement le bossage 14 de la porte 7, et présente une nervure périphérique 61 formant une arête, destinée à venir porter étroitement contre le joint 11 lorsque les enceintes 1 et 2 sont raccordées l'une à l'autre.

Cette porte 8 comprend en outre deux alésages radiaux borgnes 65, 66 de même diamètres que les alésages 55 et 56, venant, lorsque cette porte 8 est en position de fermeture montrée sur les figures 4 et 5, respectivement en face de ces alésages 55 et 56.

Les pions de verrouillage 40, 41, 42 précités sont engagés étroitement dans les alésages 55, 56, 65, 66 mais avec possibilité de coulissement dans ceux-ci.

Ainsi que cela apparaît sur les figures 4 et 5, avant mise en connexion de l'enceinte 2 avec l'enceinte 1, le pion 40 est engagé partiellement dans l'alésage 55 de telle sorte que son extrémité radialement interne affleure avec la face radiale interne de la bride 6. Il présente une longueur telle que sa partie dépassant de la bride 6 se trouve, lorsque les brides 6 et 5 sont accolées, sur la course de déplacement angulaire du doigt 35 et qu'il peut être poussé dans la direction radialement interne de la bride 6 par ce doigt 35 au cours de ce déplacement.

Egalement avant mise en connexion de l'enceinte 2 avec l'enceinte 1, le pion 41 est engagé partiellement dans l'alésage 56. Il a une longueur telle que, lorsque les brides 6 et 5 sont accolées, sa partie dépassant de la bride 6 se trouve sur la course de déplacement angulaire du doigt 36 et qu'il peut être poussé dans la direction radialement interne de la bride 6 par ce doigt 36 au cours de ce déplacement ; la longueur de ce pion 41 est en outre égale à la longueur de l'alésage 56.

Egalement avant mise en connexion de l'enceinte 2 avec l'enceinte 1, le pion 42 est engagé partiellement dans l'alésage 56, à la suite du pion 41, et dans l'alésage 66. Il maintien ainsi la porte 8 en position de fermeture.

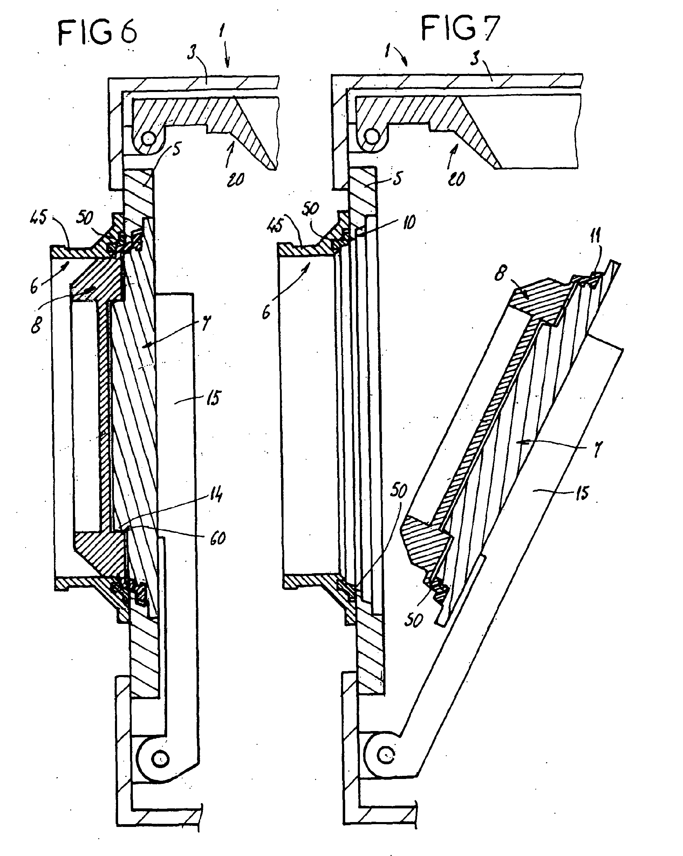

En pratique, comme le montre la figure 6, les brides 5 et 6 sont accolées et positionnées l'une par rapport à l'autre par engagement de la bride 6 sur les doigts 12 et du bossage 14 dans la cavité 60. Les portes 7 et 8 sont ensuite liées l'une à l'autre par des moyens appropriés tels que des moyens magnétiques et/ou l'exercice d'un vide entre les portes

Les leviers 33 sont alors actionnés dans le sens horaire apparaissant sur la figure 5 de manière à engager le verrou 34 derrière la paroi 46 et à dégager le verrou 32 de derrière la porte 7. Simultanément, le doigt 36 vient appuyer sur le pion 41 de manière à engager complètement ce dernier dans l'alésage 56, ce qui enfonce le pion 42 dans l'alésage 66 et libère la porte 8.

Le bras 15 peut alors pivoter pour amener la porte 7, et la porte 8 reliée à elle, en position d'ouverture, comme le montre la figure 7.

Le dispositif 20 est ensuite pivoté de sa position d'effacement montrée sur les figures 6 et 7 à sa position de recouvrement sans contact précitée, montrée sur la figure 8. Dans cette position, la portion 26 de la pièce 21 vient reposer contre la face interne de la bride 5 et la portion 25 vient recouvrir l'interface de jonction des brides 5 et 6, en particulier le rebord 10 et le joint 50. Les objets ou composants contenus dans une enceinte peuvent alors être transférés dans l'autre enceinte sans risque de contact ou de déplacement, même très léger, du joint 50, et donc sans risque de mise en communication de l'atmosphère des enceintes 1, 2 avec la zone contaminée isolée par ce joint 50.

Pour refermer et séparer les enceintes 1, 2, le dispositif 20 est amené en position d'effacement puis les portes 7 et 8 sont ramenées au contact de leur sièges respectifs, après quoi les leviers 33 sont pivotés dans le sens anti-horaire apparaissant sur la figure 5, ce qui assure le blocage de la porte 7 par le verrou 32 et la libération de la bride 6 par le verrou 34. Au cours de ce mouvement, le doigt 35 vient porter contre le pion 40, qu'il enfonce complètement dans l'alésage 55, et donc dans l'alésage 65, ce qui assure le verrouillage de la porte 8. La bride 6 est alors séparée de la bride 5 de manière à extraire le bossage 14 de la cavité 60.

Ainsi qu'il apparaît de ce qui précède, l'invention apporte une amélioration notable à la technique antérieure, en fournissant un dispositif de protection 20 propre à éliminer tout risque de contamination d'une enceinte 1 par l'autre enceinte 2 à la suite de la mise en communication de ces enceintes l'une avec l'autre.

Il va de soi que l'invention n'est pas limitée à la forme de réalisation décrite ci-dessus à titre d'exemple mais qu'elle en embrasse au contraire toutes les variantes de réalisation entrant dans le champ de protection défini par les revendications ci-annexées.

## Revendications

1. Dispositif de protection (20) pour une enceinte stérile (1) susceptible d'être mise en communication avec une autre enceinte stérile (2), afin de permettre le transfert de pièces stériles d'une enceinte à l'autre pour l'accomplissement d'un travail sur ces pièces, chaque enceinte (1, 2) comprenant une porte (7, 8) comprenant chacune une bride (5, 6) formant un siège délimitant une ouvertures, ces sièges ayant une interface de raccordement, **caractérisé en ce qu'**il comprend :
- une pièce de protection (21) présentant une paroi (25) propre à recouvrir, lorsqu'elle est engagée dans les ouvertures délimitées par les sièges des portes (7, 8) des enceintes (1, 2), l'interface de raccordement de ces sièges, sans contact avec cette interface ni avec les zones environnantes, c'est-à-dire les zones de la bride (5) formant le siège de la porte (7) jusqu'au-delà de la face extérieure d'un rebord (10) et d'un joint (50) que comprend la bride (6) et
- des moyens (26) de positionnement permettant de positionner cette paroi (25) par rapport à cette interface dans cette position de recouvrement sans contact.

2. Dispositif de protection (20) selon la revendication 1, **caractérisé en ce que**, le siège de l'une des portes (7) étant délimité par une pièce (5), lesdits moyens de positionnement sont constitués par une ou plusieurs zones (26) de la pièce de protection (21) conformées pour prendre appui contre la pièce (5) délimitant le siège de l'une des portes (7), en des emplacements stériles de celle-ci.

3. Dispositif de protection (20) selon la revendication 1 ou la revendication 2, **caractérisé en ce qu'**il comprend au moins un bras (22) de support de la pièce de protection (21), relié d'une part à cette pièce de protection (21) et d'autre part à l'une des parois (3) d'une enceinte (1), ce bras (22) permettant le déplacement de la pièce de protection (21) entre ladite position de recouvrement sans contact et une position d'effacement.

4. Dispositif de protection (20) selon la revendication 3, **caractérisé en ce que** le bras de support (22) est monté pivotant sur la paroi (3) de l'enceinte (1) à laquelle il est relié.

5. Dispositif de protection (20) selon l'une des revendications 1 à 4, **caractérisé en ce qu'**il comprend des moyens permettant d'immobiliser la pièce de protection (21) dans ladite position de recouvrement sans contact.

6. Dispositif de protection (20) selon la revendication 5, **caractérisé en ce que** les moyens d'immobilisation de la pièce de protection (21) dans ladite position de recouvrement sans contact comprennent au moins un verrou.

7. Dispositif de protection (20) selon la revendication 5, **caractérisé en ce que** les moyens d'immobilisation de la pièce de protection (21) dans ladite position de recouvrement sans contact comprennent des moyens de blocage ou de serrage agissant entre le bras de support (22) de la pièce de protection (21) et l'axe de pivotement de ce bras (22) ou entre cet axe et la console assurant le montage de cet axe sur la paroi (3) correspondante de l'enceinte (1).

8. Enceinte stérile (1) susceptible d'être mise en communication avec une autre enceinte stérile (2) afin de permettre le transfert d'objets d'une enceinte à l'autre, **caractérisée en ce qu'**elle comprend le dispositif de protection (20) selon l'une des revendications 1 à 7.

## Claims

1. A protective device (20) for protecting a sterile enclosure (1) likely to be placed in communication with another sterile enclosure (2) so as to allow sterile parts to be transferred from one enclosure to the other for the purpose of working on these parts, each enclosure (1,2) comprising a door (7,8), each door comprising a flange (5,6) forming a seat delimiting an opening, these seats having an interface where they meet, **characterized in that** it comprises:
- a protective component (21) having a wall (25) capable, when engaged in the openings delimited by the seats of the doors (7, 8) of the enclosures (1, 2), of covering the interface where these two seats meet, without contact with this interface or with the surrounding regions, that is to say the regions of the flange (5) forming the seat of the door (7) as far as beyond the exterior face of a rim (10) and of a seal (50) that the flange (6) has, and
- positioning means (26) allowing this wall (25) to be positioned with respect to this interface in this contactless covering position.

2. The protective device (20) as claimed in claim 1, **characterized in that**, the seat of one of the doors (7) being delimited by a component (5), said positioning means consist of one or more regions (26) of the protective component (21), which are shaped to bear against the component (5) delimiting the seat of one of the doors (7), at sterile locations thereof.

3. The protective device (20) as claimed in claim 1 or claim 2, **characterized in that** it comprises at least one arm (22) for supporting the protective component (21), which arm is connected on the one hand to this protective component (21) and on the other hand to one of the walls (3) of an enclosure (1), this arm (22) allowing the protective component (21) to be moved between said contactless covering position and a retracted position.

4. The protective device (20) as claimed in claim 3, **characterized in that** the support arm (22) is mounted so that it can pivot on the wall (3) of the enclosure (1) to which it is connected.

5. The protective device (20) as claimed in one of claims 1 to 4, **characterized in that** it comprises means allowing the protective component (21) to be immobilized in said contactless covering position.

6. The protective device (20) as claimed in claim 5, **characterized in that** the means of immobilizing the protective component (21) in said contactless covering position comprise at least one latch.

7. The protective device (20) as claimed in claim 5, **characterized in that** the means of immobilizing the protective component (21) in said contactless covering position comprise blocking or clamping means acting between the arm (22) supporting the protective component (21) and the axle about which this arm (22) pivots or between this axle and the bracket used for mounting this axle on the corresponding wall (3) of the enclosure (1).

8. A sterile enclosure (1) likely to be placed in communication with another sterile enclosure (2) so as to allow objects to be transferred from one enclosure to the other, **characterized in that** it comprises the protective device (20) as claimed in one of claims 1 to 7.

## Patentansprüche

1. Schutzvorrichtung (20) für eine sterile Kammer (1), die dazu geeignet ist, in Kommunikation mit einer anderen sterilen Kammer (2) gebracht zu werden, um den Transfer von sterilen Teilen von der einen Kammer in die andere Kammer zu ermöglichen, um diese Teile bearbeiten zu können, wobei jede Kammer (1, 2) eine Tür (7, 8) mit jeweils einem Flansch (5, 6) aufweist, welcher einen Sitz bildet, der eine Öffnung begrenzt, und wobei die Sitze eine Anschlussfläche besitzen, **dadurch gekennzeichnet, dass** die Vorrichtung ferner Folgendes aufweist:
- ein Schutzelement (21) mit einer Wand (25), die dazu in der Lage ist, wenn sie in die Öffnungen, die durch die Sitze der Türen (7, 8) der Kammern (1, 2) begrenzt werden, eingreift, die Anschlussflächen der Sitze abzudecken, und zwar ohne Kontakt mit dieser Anschlussfläche oder mit umgebenden Bereichen, also die Bereiche des Flansches (5) abzudecken, die den Sitz der Tür (7) bilden, und zwar bis über die äußere Fläche einer Kante (10) und einer Dichtung (50), welche den Flansch (6) umfasst, hinaus, und
- Positionierungsmittel, welche die Positionierung der Wand (25) zu der Anschlussfläche in der Abdeckposition ohne Kontakt ermöglichen.

2. Schutzvorrichtung (20) nach Anspruch 1, **dadurch gekennzeichnet, dass** der Sitz der einen Tür (7) durch ein Element (5) begrenzt ist, wobei die Positionierungsmittel durch eine oder mehrere Bereiche (26) des Schutzelements (21) gebildet sind, welche derart ausgebildet sind, dass sie gegen das Element (5) in Anschlag kommen, welches den Sitz einer der Türen (7) begrenzt, und zwar an sterilen Plätzen von dieser.

3. Schutzvorrichtung (20) nach Anspruch 1 oder 2, **dadurch gekennzeichnet, dass** sie zumindest einen Arm (22) zur Stütze des Schutzelements (21) aufweist, welcher einerseits mit dem Schutzelement (21) und andererseits mit einer der Wände (3) der Kammer (1) verbunden ist, wobei der Arm (22) ein Verschieben des Schutzelements (21) zwischen einer Abdeckposition ohne Kontakt und einer zurückgeschobenen Position ermöglicht.

4. Schutzvorrichtung (20) nach Anspruch 3, **dadurch gekennzeichnet, dass** der Stützarm (22) schwenkbar an der Wand (3) der Kammer (1) angebracht ist, mit welcher er verbunden ist.

5. Schutzvorrichtung (20) nach einem der Ansprüche 1 bis 4, **dadurch gekennzeichnet, dass** sie Mittel aufweist, die es ermöglichen, das Schutzelement (21) in der Abdeckposition ohne Kontakt zu immobilisieren.

6. Schutzvorrichtung (20) nach Anspruch 5, **dadurch gekennzeichnet, dass** die Mittel zum Immobilisieren des Schutzelements (21) in der Abdeckposition ohne Kontakt zumindest eine Verriegelung aufweisen.

7. Schutzvorrichtung (20) nach Anspruch 5, **dadurch gekennzeichnet, dass** die Mittel zum Immobilisieren des Schutzelements (21) in der Abdeckposition ohne Kontakt Mittel zum Blockieren oder Einklemmen aufweisen, die zwischen dem Stützarm (22) des Schutzelements (21) und der Schwenkachse des Armes (22) liegen, oder zwischen dieser Achse und dem Träger, welcher die Anbringung dieser Achse an der entsprechenden Wand (3) der Kammer (1) sichert.

8. Sterile Kammer (1), die in Kommunikation mit einer anderen sterilen Kammer (2) gebracht werden kann, um den Transfer von Objekten von einer Kammer in die andere Kammer zu ermöglichen, **dadurch gekennzeichnet, dass** sie die Schutzvorrichtung (20) gemäß einem der Ansprüche 1 bis 7 aufweist.
